(19) **Europäisches Patentamt**
**European Patent Office**
**Office européen des brevets**

(11) **EP 2 790 872 B1**

(12) **FASCICULE DE BREVET EUROPEEN**

(45) Date de publication et mention
de la délivrance du brevet:
**10.02.2016 Bulletin 2016/06**

(21) Numéro de dépôt: **12806549.7**

(22) Date de dépôt: **22.11.2012**

(51) Int Cl.:
*B23K 37/04* (2006.01)          *B23K 26/32* (2014.01)
*B23K 26/22* (2006.01)

(86) Numéro de dépôt international:
**PCT/FR2012/052698**

(87) Numéro de publication internationale:
**WO 2013/088014 (20.06.2013 Gazette 2013/25)**

(54) **PROCEDE DE SOUDAGE DE TOLES PAR LASER, UNE DES TOLES ETANT MUNIE DE BOSSAGES AFIN DE CREER UN JEU DE DEGAZAGE**

BLECHLASERSCHWEISSVERFAHREN MIT NABEN AUF EINEM DER BLECHE ZUR HERSTELLUNG EINES ENTGASUNGSZWISCHENRAUMS

SHEET METAL LASER-WELDING METHOD, WHEREIN ONE OF THE METAL SHEETS IS PROVIDED WITH BOSSES SUCH AS TO CREATE CLEARANCE FOR DEGASSING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2011 FR 1161504**

(43) Date de publication de la demande:
**22.10.2014 Bulletin 2014/43**

(73) Titulaire: **Peugeot Citroën Automobiles SA 78140 Vélizy Villacoublay (FR)**

(72) Inventeurs:
• **DIOTALEVI, Louis**
**F-25200 Grand Charmont (FR)**
• **BELZ, Frederic**
**F-25260 Saint Maurice Colombier (FR)**
• **ANCEL, Yves**
**F-25630 Sainte Suzanne (FR)**
• **POLONI, Eric**
**F-70400 Hericourt (FR)**

(56) Documents cités:
**JP-A- 2001 162 388      JP-A- 2007 038 269
JP-A- 2008 290 129      US-A- 5 104 032**

**Description**

L'invention a trait domaine du soudage des tôles métalliques par faisceau laser comme cela est défini dans le préambule de la revendication 1 (voir, par exemple, US 5 104 032), notamment dans le domaine automobile.

Le soudage au laser des tôles métalliques est effectué par recouvrement (c'est-à-dire que les tôles se chevauchent), au moyen d'un faisceau monochromatique de puissance émettant dans le domaine de l'infrarouge.

On rencontre des problèmes avec ce type de soudage lorsque les tôles sont galvanisées. La température de fusion du zinc étant inférieure à celle de l'acier, le laser provoque une vaporisation du zinc qui est susceptible de former des porosités ou des pollutions au zinc dans le cordon de soudure, au détriment de la tenue mécanique de ce dernier.

Une solution connue consiste à ménager un jeu, dénommé « jeu de dégazage », entre les tôles à souder pour permettre le dégazage du zinc dans la zone à souder. Pour former ce jeu, il est connu du brevet français FR 2 731 373 de former des bossages sur l'une des tôles par une opération d'emboutissage pour faciliter le départ des vapeurs dans l'intervalle entre les tôles lors du soudage par le faisceau laser.

Cette solution est satisfaisante ; elle a fait ses preuves dans la production automobile, notamment pour la fabrication de portes.

Néanmoins, il est apparu nécessaire de la perfectionner.

En effet, il ressort de l'expérience de fabrication que le contrôle du jeu de dégazage lors du soudage est important pour la qualité de la soudure. En d'autres termes, la valeur du jeu de dégazage doit être précise, en fonction notamment de l'épaisseur des tôles et de l'épaisseur de la couche de galvanisation. Dans la solution précitée, la précision du jeu de dégazage dépend de la précision de l'emboutissage, qui détermine en effet la hauteur des bossages.

Lorsqu'il s'avère que cette hauteur ne convient pas lors du soudage, il est par conséquent nécessaire d'intervenir sur la presse d'emboutissage, pour régler la profondeur de l'emboutissage (lorsque cela est possible), ou encore remplacer les matrices d'emboutissage (lorsque cela est possible).

Un objectif est de proposer un procédé de soudage de tôles au laser, qui permette un réglage du jeu de dégazage indépendant de la fabrication des tôles.

A cet effet, il est proposé un procédé de soudage de tôles par faisceau laser tel que défini dans la revendication 1.

Ce procédé peut être appliqué au soudage de tôles de carrosserie d'un véhicule automobile, et notamment au soudage d'une doublure de porte d'un véhicule automobile sur un panneau de porte.

Grâce à ce procédé, le réglage du jeu de dégazage est indépendant de la fabrication des tôles, et notamment de l'emboutissage de la tôle bosselée. Le jeu de dégazage peut être réglé finement et ponctuellement, au niveau de chaque bossage.

Diverses caractéristiques supplémentaires peuvent être prévues, seules ou en combinaison :

D'autres objets et avantages de l'invention apparaîtront à la lumière de la description d'un mode préféré de réalisation, faite ci-après en référence aux dessins annexés dans lesquels :

- la figure 1 est une vue schématique montrant un panneau de porte et une doublure de porte destinées à être assemblées par soudage laser ;
- les figures 2 et 3 sont de vues en perspectives illustrant l'assemblage de deux tôles en vue de leur soudage au laser ;
- Les figures 4 et 5 sont des vues en coupe illustrant le réglage du jeu de dégazage entre les tôles ainsi assemblées ;
- la figure 6 est une vue en perspective illustrant le soudage des tôles après réglage du jeu de dégazage.

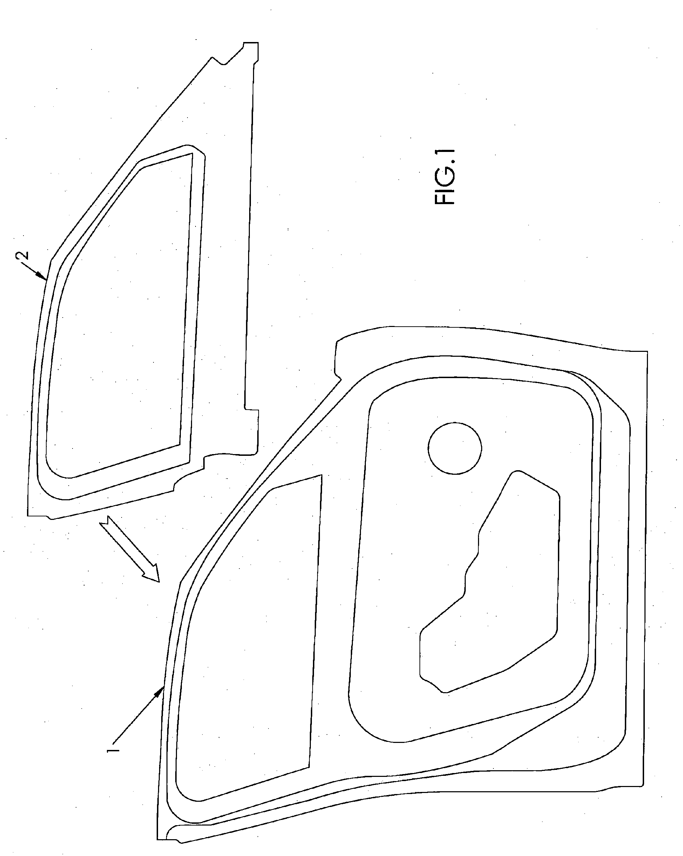

Sur la figure 1 est représenté un panneau **1** de porte et une doublure **2** de porte tous deux formés par emboutissage de tôles **3, 4** d'acier galvanisé, cette galvanisation ayant pour fonction de préserver l'acier de la corrosion.

La doublure **2** de porte est destinée à être soudée au laser sur le panneau **1** de porte, le long de leurs bords communs, au moyen d'un procédé qui va être décrit ci dessous.

Ce procédé, bien qu'applicable à l'assemblage des éléments de carrosserie d'un véhicule automobile (notamment des panneaux de porte et doublures de portes), n'est pas limité à cette application et peut être généralisé à tout assemblage de tôles **3, 4** galvanisées ou plus généralement, conformément à la présente invention, revêtues d'une couche réalisée dans un matériau dont le point de fusion est plus bas que celui du matériau constitutif de la tôle.

Ainsi qu'il est représenté sur la figure 1, l'une **3** des tôles présente un bord sensiblement plan, tandis que l'autre **4** présente un bord bosselé, muni de bossages **5** formés par emboutissage.

Sur la figure 1, les bossages **5** présentent un contour sensiblement carré mais ce contour peut être quelconque, notamment circulaire.

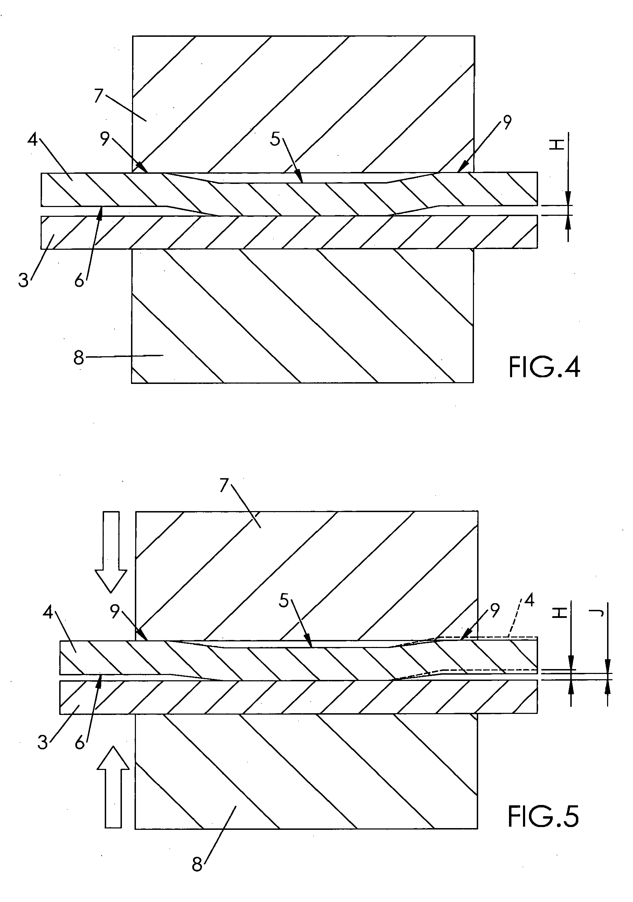

Ces bossages **5** créent sur une face **6** antérieure de la tôle bosselée une surépaisseur d'une valeur notée H, de sorte que lorsque les tôles **3, 4** sont simplement appliquées l'une contre l'autre, l'écartement entre les tôles **3, 4** est égal à la surépaisseur H (figure 4).

Pour permettre leur soudage, les tôles **3, 4** doivent être maintenues avec entre elles un jeu de dégazage prédéterminé, noté J, fonction notamment de l'épaisseur de la couche de galvanisation et de l'épaisseur des tôles **3, 4**.

Dans leur article « Soudage des tôles d'acier revêtues » paru dans les techniques de l'ingénieur, 2005, vol. BT4, n°BM7771, J. Claeys, T.Dupuy et P.Verrier fournissent une formule empirique permettant de calculer le jeu de dégazage :

$$J = \frac{AVr}{\sqrt{e}}$$

Où :

| | |
|---|---|
| $A$ [s·m-**1/2**] | est une constante fonction des caractéristiques du faisceau laser ; |
| $V$ [m/s] | est la vitesse de soudage |
| $r$ [m] | est l'épaisseur du revêtement (ici la couche de galvanisation) |
| $e$ [m] | est l'épaisseur des tôles. |

La hauteur H du bossage est volontairement réglée supérieure, à l'emboutissage, au jeu J de dégazage. En d'autres termes, le jeu J de dégazage visé est inférieur à la hauteur H du bossage, auquel est égal l'écartement entre les tôles **3, 4** simplement appliquées l'une contre l'autre en l'absence de serrage.

C'est pourquoi le maintien des tôles **3, 4** est accompagné d'une opération d'écrasement des bossages **5** jusqu'à égalisation de la surépaisseur H avec le jeu J de dégazage (moyennant des tolérances de fabrications que l'on peut ici négliger) :

$$H \cong J$$

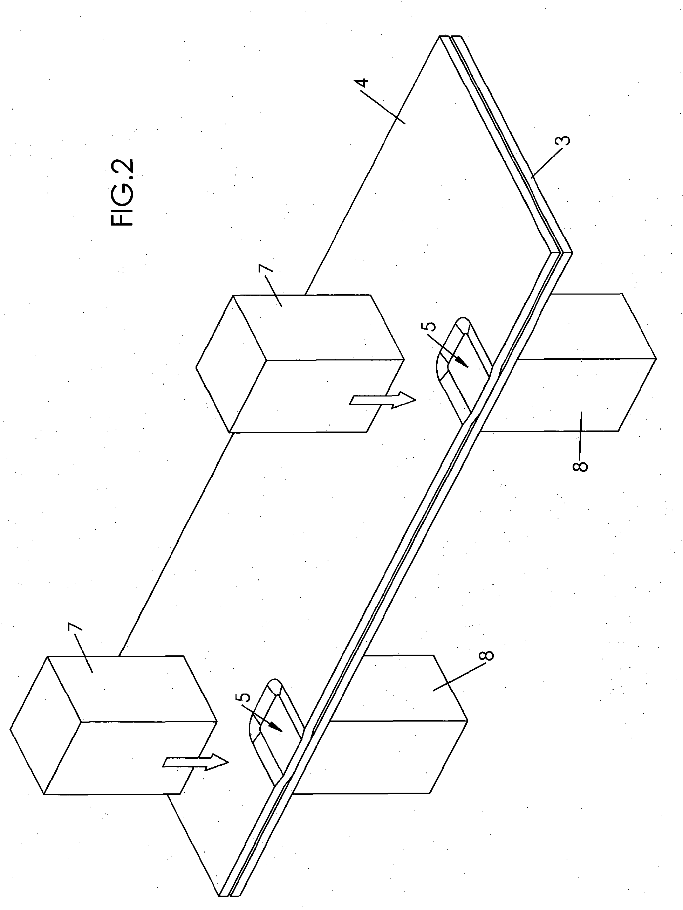

Concrètement, l'opération d'écrasement est conduite au moyen d'une presse à mâchoires comprenant une mâchoire 7 supérieure appliquée contre la tôle **4** bosselée au niveau d'un (ou de chaque) bossage **5**, et une mâchoire **8** inférieure appliquée à l'opposé contre la tôle **3** sous-jacente (non bosselée), au droit du bossage **5**, comme illustré sur la figure 2.

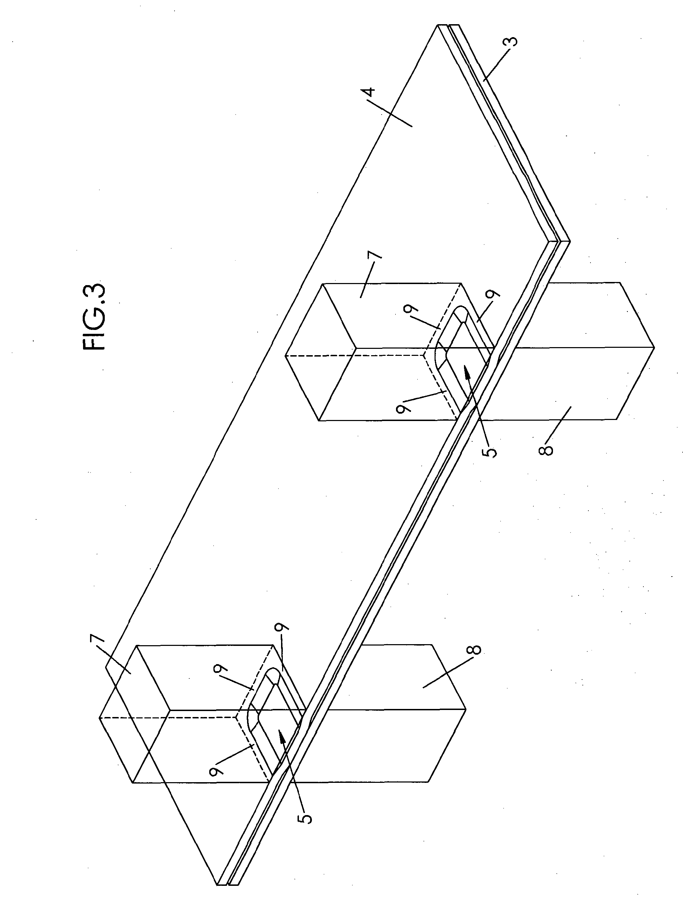

On voit sur la figure 3 que la mâchoire **7** supérieure au moins (et en pratique les deux mâchoires **7, 8**, supérieure et inférieure) est dimensionnée pour recouvrir le bossage **5** et prendre appui sur le pourtour **9** non bosselé de celui-ci, de sorte à permettre l'écrasement de la matière.

Le serrage des mâchoires **7, 8** peut être manuel, mais sur les chaînes de fabrication modernes, équipées de presses hydrauliques, ce serrage peut être effectué de manière automatique jusqu'à l'obtention de la valeur souhaitée (égale au jeu J de dégazage) pour l'écartement entre les tôles **3, 4**.

On a représenté sur la figure 5 l'opération d'écrasement d'un bossage **5**, les mâchoires étant rapprochées comme indiqué par les flèches, tandis que la tôle **4** bosselée, initialement dans la configuration en pointillés, est écrasée jusqu'à ce que l'écartement entre les tôles **3, 4** soit sensiblement égal au jeu J de dégazage.

Cet écartement peut être réglé au moyen de cales à l'épaisseur du jeu de dégazage, intercalées de manière amovible entre les tôles **3, 4** au voisinage des bossages **5**, ce qui facilite le réglage.

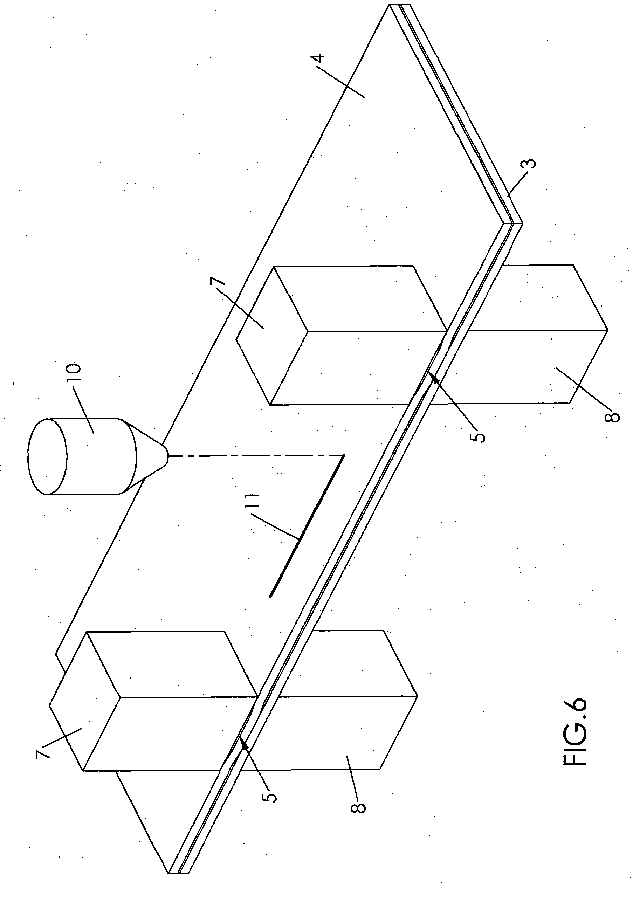

Une fois ce réglage effectué, en maintenant les tôles **3, 4** ainsi serrées, le soudage peut être réalisé au trait entre les bossages **5** au moyen d'une tête **10** laser, de sorte à alterner les traits **11** (ou cordons) de soudure avec les bossages **5**, comme illustré sur la figure 6.

Ce procédé présente les avantages suivants.

Premièrement, le procédé permet de rendre indépendant le réglage du jeu J de dégazage de la fabrication de la tôle **4** bosselée. Des tolérances de fabrication moins strictes peuvent ainsi être appliquées à l'emboutissage, ce qui simplifie la fabrication (et le réglage des presses d'emboutissage) tout en limitant le rebut.

Deuxièmement, le procédé permet de régler finement l'écartement entre les tôles **3, 4** au moment du serrage des tôles, au bénéfice de la précision de fabrication.

Troisièmement, le procédé permet d'obtenir une bonne répétabilité du soudage des tôles **3, 4**, au bénéfice de la qualité de fabrication.

**Revendications**

1.  Procédé de soudage de tôles (**3, 4**) revêtues d'une couche realisée dans un matériau dont le point de fusion est plus bas que celui du matériau constitutif de la tôle (3,4) par faisceau laser, l'une au moins des tôles (**3, 4**) étant munie de bossages (**5**) formant une surépaisseur (H) sur la tôle ainsi bosselée, ce procédé comprenant une opération d'assemblage des tôles (**3, 4**), une opération de maintien des tôles (**3, 4**) avec entre elles un jeu (J) de dégazage prédéterminé, et une opération de soudage des tôles (**3, 4**) ainsi maintenues le soudage étant effectué au trait entre les bossages (**5**), les traits (**11**) de soudage alternant avec les bossages (**5**), **caractérisé en ce que** le jeu (J) de dégazage est inférieur à la surépaisseur (H) formée par les bossages (**5**), l'opération de maintien des tôles (**3, 4**) comprend une opération d'écrasement des bossages (**5**) jusqu'à égalisation de la surépaisseur (H) avec le jeu (J) de dégazage, et **en ce que** l'opération d'écrasement est conduite au moyen d'une presse à mâchoires (7, 8), une mâchoire (7) supérieure étant appliquée contre la tôle (4) bosselée au niveau d'un bossage (5), et une mâchoire (8) inférieure appliquée à l'opposé contre la tôle (3) sous-jacente, la mâchoire supérieure (7) étant dimensionnée pour recouvrir le bossage (5) et prendre appui sur un pourtour (9) non bosselé de celui-ci.

**2.** Application du procédé selon la revendication précédente au soudage de tôles (**3**, **4**) de carrosserie d'un véhicule automobile.

**3.** Application du procédé selon la revendication 1 au soudage d'une doublure (**2**) de porte d'un véhicule automobile sur un panneau (**1**) de porte.


**Patentansprüche**

**1.** Verfahren für das Schweißen von Blechen (3, 4), die mit einer Schicht bedeckt sind, die aus einem Material hergestellt ist, dessen Schmelzpunkt niedriger ist als der des Materials, aus dem das Blech (3, 4) besteht, durch Laserstrahl, wobei mindestens eines der Bleche (3, 4) mit Höckern (5) ausgestattet ist, die auf dem Blech, das damit Vorsprünge hat, eine Überdicke (H) bilden, wobei dieses Verfahren einen Verbindungsvorgang der Bleche (3, 4), einen Haltevorgang der Bleche (3, 4) mit einem vorbestimmten Entgasungsspiel (J) zwischen ihnen und einen Schweißvorgang der derart gehaltenen Bleche (3, 4) umfasst, wobei das Schweißen zwischen den Höckern (5) strichförmig durchgeführt wird, wobei sich die Schweißstriche (11) mit den Höckern (5) abwechseln, **dadurch gekennzeichnet, dass** das Entgasungsspiel (J) kleiner als die von den Höckern (5) gebildete Überdicke (H) ist, der Haltevorgang der Bleche (3, 4) einen Druckverformungsvorgang der höckern (5) bis zur Angleichung der Überdicke (H) an das Entgasungsspiel (J) umfasst und dass der Druckverformungsvorgang mittels einer Backenpresse (7, 8) durchgeführt wird, wobei eine obere Backe (7) an das Höckerblech (4) im Bereich eines Höckers (5) angelegt wird und eine untere Backe (8) gegenüberliegend an das darunter liegende Blech (3) angelegt wird, wobei die obere Backe (7) bemessen ist, um den Höcker (5) zu bedecken und sich auf einem Umfang (9) ohne Vorsprung derselben abzustützen.

**2.** Anwendung des Verfahrens nach vorangehendem Anspruch auf das Schweißen von Karosseriebleche (3, 4) eines Kraftfahrzeugs.

**3.** Anwendung des Verfahrens nach Anspruch 1 auf das Schweißen einer Türverkleidung (2) eines Kraftfahrzeugs auf eine Türplatte (1).


**Claims**

**1.** Method for welding metal sheets (3, 4) coated with a layer made from a material with a melting point lower than that of the material forming the metal sheet (3, 4) by a laser beam, at least one of the metal sheets (3, 4) being provided with bosses (5) forming a thickened portion (H) on the thus-embossed metal sheet, this method including an operation for assembling the metal sheets (3, 4), an operation for holding the metal sheets (3, 4) for degassing with a predetermined clearance (J) therebetween, and an operation for welding the thus-held metal sheets (3, 4), the welding being performed at the line between the bosses (5), the weld lines (11) alternating with the bosses (5), **characterised in that** the clearance (J) for degassing is less than the thickened portion (H) formed by the bosses (5), the operation for holding the metal sheets (3, 4) includes an operation for crushing the bosses (5) until the thickened portion (H) is made level with the clearance (J) for degassing, and **in that** the crushing operation is conducted using a pressing jaw tool (7, 8), an upper jaw (7) being applied against the embossed metal sheet (4) at the level of a boss (5), and a lower jaw (8) applied opposite, against the subjacent metal sheet (3), the upper jaw (7) being dimensioned such that it covers the boss (5) and rests against a non-embossed rim (9) of the latter.

**2.** Application of the method according to the previous claim to the welding of metal sheets (3, 4) of a body of a motor vehicle.

**3.** Application of the method according to claim 1 to the welding of a door lining (2) of a motor vehicle on a door panel (1).

FIG.1

FIG.2

FIG.3

FIG.4

FIG.5

8

FIG.6

**EP 2 790 872 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5104032 A

- FR 2731373

**Littérature non-brevet citée dans la description**

- fournissent une formule empirique permettant de calculer le jeu de dégazage. **J. CLAEYS ; T.DUPUY ; P.VERRIER.** Soudage des tôles d'acier revêtues. les techniques de l'ingénieur, 2005, vol. BT4